# EUROPÄISCHE PATENTANMELDUNG

(11) **EP 1 107 161 A2**
(43) Veröffentlichungstag der Anmeldung: **13.06.2001**
(21) Anmeldenummer: 00126957.0
(22) Anmeldetag: 08.12.2000
(51) Int. Cl.: G06K 7/00, G06K 19/07

(54) **Schaltungsanordnung zur Signalrückmeldung**

(30) Priorität: 10.12.1999 DE 19959648
(71) Anmelder: VLG Virtual Laser Systems GmbH, 82152 Krailling (DE)
(72) Erfinder: Sonntag, Harold Dieter, 81477 München (DE)
(74) Vertreter: Schmidt, Steffen J., Dipl.-Ing.

(57) **Zusammenfassung**

Eine Schaltungsanordnung zur Signalrückmeldung, mit einer Rechnereinheit, die zur Einspeisung, zur Verarbeitung und zur Ausgabe von Datensignalen eingerichtet ist, einer Empfängereinheit, die dazu eingerichtet ist, von einem externen Geber auf einen Lichtstrahl aufgeprägte Befehle, Daten oder Geber-Kennzeichnungen zu empfangen und an die Rechnereinheit weiter zu leiten, wobei die Empfängereinheit dazu eingerichtet ist, empfangenes Licht in elektrische Energie zu wandeln, und die Empfängereinheit mit einem Energiespeicher verbunden ist, der zum Betrieb der Rechnereinheit elektrische Energie zur Verfügung stellt.

## Beschreibung

### Hintergrund der Erfindung

Die vorliegende Erfindung betrifft eine Schaltungsanordnung zur Signalrückmeldung. Derartige Schaltungsanordnungen sind zum Beispiel in Form von Transponder-Systemen bei Zugangskontrollsystemen, Personen-Identifikationssystemen, als Diebstahlssicherungssysteme, als Warenfluß-Steuersystem, als Gepäckfluß-Steuersystem auf Flughäfen oder dergl. im Einsatz. Ganz generell wird dabei durch einen Geber ein Signal ausgegeben, das den Transponder anregt, eine Rückmeldung abzugeben, wobei die Rückmeldung ggf. eine für den Transponder charakteristische Kennung beinhaltet.

### Stand der Technik

Im Stand der Technik werden zwei unterschiedliche Varianten angewendet. Zum einen gibt es Systeme, bei denen der Transponder mit dem Geber in elektrischen Kontakt kommen muß, um das von dem Geber ausgegebene Signal aufzunehmen und die Rückmeldung zurückzugeben. Zum anderen kommen berührungslose System zum Einsatz, bei denen der Transponder lediglich in räumliche Nähe zu dem Geber kommen muß, um das von dem Geber ausgegebene Signal aufzunehmen und die Rückmeldung zurückzugeben. Bei der zweitgenannten Variante werden die von dem Geber ausgegebenen Signale hauptsächlich mittels induktiver oder kapazitiver Kopplung, oder mittels Funkwellen übertragen.

Die berührungslosen Varianten sind aufgrund der geringeren Probleme bei der Übertragung (keine Kontaktkorrosion, Positionierprobleme der Kontakte zwischen Geber und Transponder etc.) bevorzugt. Allerdings besteht zumindest bei Transpondern ohne eigene Stromversorgung das Problem, der Transponderschaltung die erforderliche Betriebsenergie bereitzustellen. Bei besonders einfachen Anwendungen ist der Transponder ein induktiver oder kapazitiver Saugkreis, der dem Geber mit einer bestimmten Resonanzfrequenz Energie entzieht, sobald Geber und Transponder räumlich dicht zueinander kommen. Dieser Sachverhalt kann geberseitig ausgewertet werden. Allerdings kann damit lediglich die An- oder Abwesenheit eines Transponders oder einer Gruppe von Transpondern festgestellt werden. Eine weitergehende Informationsübermittlung ist nicht möglich. Für einen umfangreicheren Informationsaustausch zwischen dem Transponder und dem Geber ist es erforderlich, den Transponder mit elektrischer Energie zu versorgen, damit eine entsprechende Schaltungsanordnung betrieben werden kann.

Insbesondere die letztgenannten Systeme haben jedoch aufgrund der kaum vorhandenen oder in der Praxis nur schwer realisierbaren Richtungsempfindlichkeit folgenden erheblichen Nachteil: Zum Beispiel in einer Warteschlange von Personen an der Eingangstür eines Veranstaltungsraumes mit einer derartigen Zugangskontrolle spricht der Geber nicht den Transponder (also die Eintrittskarte) des unmittelbar an der Eingangstür stehenden Besuchers an und entwertet diese damit auch. Vielmehr wird aufgrund der ungünstiger Ausbreitungsverhältnisse der ausgesendeten Signale der Transponder in der Eintrittskarte eines anderen Besuchers angesprochen, der die Eingangstür noch nicht passiert hat. Dies geschieht von allen beteiligten Personen unbemerkt, da der unmittelbar an der Eingangstür stehende Besucher - mit nicht entwerteter Eintrittskarte - die Eingangstür unbehelligt passieren kann. Erst wenn der andere Besucher mit seiner bereits entwerteten Eintrittskarte versucht, die Eingangstür ebenfalls zu passieren stellt das System fest, daß dessen Eintrittskarte bereits entwertet ist und daher diesem Besucher der Eintritt zu verwehren ist. Dies führt zu unerfreulichen Situationen.

### Der Erfindung zugrundeliegendes Problem

Ausgehend von den vorstehend beschriebenen Nachteilen und Unzulänglichkeiten der unterschiedlichen, im Stand der Technik bekannten Schaltungsanordnungen zur Signalrückmeldung hat die Erfindung die Aufgabe, diese Schwierigkeiten zu überwinden und eine Schaltungsanordnung bereitzustellen, die kostengünstig, einfach zu implementieren und für die unterschiedlichsten Anwendungsgebiete einsetzbar ist.

### Erfindungsgemäße Lösung

Die Erfindung löst diese Aufgabe gemäß einem ersten Aspekt der Erfindung durch eine Schaltungsanordnung zur Signalrückmeldung, mit einer Rechnereinheit, die zur Einspeisung, zur Verarbeitung und zur Ausgabe von Datensignalen eingerichtet ist, einer Empfängereinheit, die dazu eingerichtet ist, von einem externen Geber auf einen Lichtstrahl aufgeprägte Befehle, Daten oder Geber-Kennzeichnungen zu empfangen und an einen Dateneingang der Rechnereinheit weiter zu leiten, wobei die Empfängereinheit dazu eingerichtet ist, empfangenes Licht in elektrische Energie zu wandeln, und die Empfängereinheit mit einem Energiespeicher verbunden ist, der zum Betrieb der Rechnereinheit elektrische Energie zur Verfügung stellt. Der Lichtstrahl im Sinne der Erfindung ist dabei sichtbares, gebündeltes oder gerichtetes Licht mit vorzugsweise geringer Divergenz, im sichtbaren Spektrum bis hin zu ultraviolettem bzw. infrarotem Licht.

### Vorteile und Ausgestaltungen der Erfindung

Durch die erfindungsgemäße Schaltungsanordnung wird der erhebliche Nachteil des Standes der Technik kontaktloser Übertragungssysteme vermieden, daß die Energieübertragung aufgrund der geringen Bündelung der Hochfrequenzstrahlung zu dem Transponder sehr uneffizient ist. Demgegenüber ist ein Lichtstrahl sehr schmal bündelbar bzw. bei Verwendung einer Laserlichtquelle ohnehin scharf gebündelt und gerichtet. Außerdem wird auch das Einstrahlungsrisiko von Hochfrequenzstrahlung zum Beispiel auf Herzschrittmacher, Hörgeräte etc. erheblich verringert. Schließlich ist für einen Nutzer dieser Erfindung die Funktionsweise und Funktionsfähigkeit wesentlich klarer erfaßbar, da der Nutzer den ausgestrahlten Lichtstrahl - wenn dieser im sichtbaren Spektrum liegt - unmittelbar sehen kann.

In einer ersten Ausführungsform der Erfindung weist die Empfängereinheit einen ersten Bereich, der zum Befehls-, Daten- oder Geber-Kennzeichnungsempfang eingerichtet ist, und einen zweiten Bereich auf, der zum Energieempfang für den Betrieb der Rechnereinheit eingerichtet ist.

Dies kann zum Beispiel dadurch realisiert werden, daß wenigstens eine Solarzellenanordnung vorgesehen ist, die den ersten Bereich bildet, und wenigstens ein Lichtsensor vorgesehen ist, der den zweiten Bereich bildet. Alternativ dazu kann aber mit schnell reagierenden Solarzellen (zum Beispiel GaAs-Zellen) auch auf den Lichtsensor verzichtet werden um statt dessen neben der Energieaufnahme auch der Befehls-, Daten- oder Geber-Kennzeichnungsempfang über die Solarzellenanordnung abzuwickeln. In diesem Fall ist die Solarzellenanordnung sowohl mit dem Energiespeicher als auch mit einem Dateneingang (mit entsprechender Signalaufbereitungsstufe) der Rechnereinheit verbunden. Dabei ist je nach Trägheit der verwendeten Solarzellenanordnung die Taktrate der übertragenen Befehle, Daten oder GeberKennzeichnungen anzupassen.

In einer bevorzugten Ausführungsform weist der Energiespeicher wenigstens einen (Elektrolyt-)Kondensator auf. Statt dessen kann aber auch ein sog. UltraCap verwendet werden.

Weiterhin ist erfindungsgemäß eine Ladungssteuerung vorgesehen, die eine Grundladung des Energiespeichers auf einen ersten vorbestimmten Pegel aus der Umgebungshelligkeit bewirkt und eine für den Betrieb der Rechnereinheit darüber hinaus erforderliche Ladung des Energiespeichers mit einem zweiten vorbestimmten Pegel durch Licht von dem externen Geber bewirkt. Dadurch wird erreicht, daß die Rechnereinheit erst dann beginnt, empfangene Lichtsignale daraufhin zu untersuchen, ob diesen Lichtstrahlen Befehle, Daten oder Geber-Kennzeichnungen aufgeprägt sind und diese ggf. auswertet, wenn zusätzlich zu der aus der Umgebungshelligkeit gewonnenen Aufladung des Energiespeichers der Lichtstrahl so viel zusätzliche Energie in den Energiespeicher eingebracht hat, daß die Rechnereinheit ein entsprechendes Software-Programm sicher abarbeiten kann. Diese Vorgehensweise hat unter anderem den Vorteil einer relativ kurzen Zeitdauer, während der ein Nutzer mittels eines entsprechenden Gebers einen Lichtstrahl, dem Befehle, Daten oder Geber-Kennzeichnungen aufgeprägt sind, auf die Empfängereinheit richten muß, bis der Energiespeicher ausreichend Ladung erhalten hat, um den Betrieb der Rechnereinheit sicherzustellen.

Vorzugsweise ist die Ladungssteuerung mit einem Pegelwächter ausgestattet und dazu eingerichtet, ein Startsignal an die Rechnereinheit abzugeben, wenn die für den Betrieb der Rechnereinheit erforderliche Ladung des Energiespeichers durch auf die Empfängereinheit einstrahlendes Licht bereitgestellt ist. Dabei kann das einstrahlende Licht von dem externen Geber oder von einer anderen Lichtquelle kommen. Im zweiten Fall (das Licht kommt von einer anderen Lichtquelle), wird der Pegelwächter zwar ansprechen, wodurch die Ladungssteuerung ein Startsignal an die Rechnereinheit abgeben wird. Allerdings enthält das empfangene Licht in diesem Fall keine aufgeprägten Befehle, Daten oder Geber-Kennzeichnungen, so daß die Abarbeitung des entsprechenden Programms nicht dazu führt, daß die Rechnereinheit aus dem Lichtstrahl diese Befehle, Daten oder Geber-Kennzeichnungen extrahieren kann.

Weiterhin ist bei der erfindungsgemäßen Schaltungsanordnung vorgesehen, daß die Rechnereinheit einen Datenspeicher aufweist, in dem eine für die jeweilige Schaltungsanordnung oder eine Gruppe von gleichartigen Schaltungsanordnungen charakteristische Kennung oder eine andere Information gespeichert ist.

Vorzugsweise ist bei der erfindungsgemäßen Schaltungsanordnung die Rechnereinheit mit einem Emitter verbunden ist, der dazu eingerichtet ist, ein von der Rechnereinheit erzeugtes, die charakteristische Kennung oder andere Information wiedergebendes Signal auszustrahlen. Auf diese Weise ist eine Rückmeldung an den Geber möglich.

Damit der Geber eine Rückmeldung auch tatsächlich als Rückmeldung auf den ursprünglich von ihm ausgestrahlten Lichtstrahl erkennen kann, ist die Rechnereinheit in der Schaltungsanordnung dazu eingerichtet und programmiert, mit einer auszustrahlenden charakteristischen Kennung (der Schaltungsanordnung) oder anderen Information, vorher empfangene Daten, Befehle oder Geber-Kennzeichnungen zu verknüpfen und mit diesen zusammen (an den Geber zurück) auszustrahlen.

Vorzugsweise ist bei der erfindungsgemäßen Schaltungsanordnung der Emitter eine Leuchtdiode mit geringem Strahlwinkel, insbesondere für sichtbares oder infrarotes Licht.

Die Erfindung betrifft auch einen zur Zusammenwirkung mit der vorstehend beschriebenen Schaltungsanordnung in ihren unterschiedlichen Ausgestaltungen eingerichteten, manuell betätigbaren, handgehaltenen Geber, mit einer Steuereinheit, die mit einem Emitter für gebündeltes Licht, und einem Empfänger für die von der Schaltungsanordnung ausgestrahlte charakteristische Kennung oder andere Informationen verbunden ist, wobei die Steuereinheit dazu eingerichtet ist, über den Emitter innerhalb eines vorbestimmten Zeitintervalls solange gebündeltes Licht auszusenden, bis über den Empfänger eine von der Schaltungsanordnung ausgestrahlte charakteristische Kennung oder andere Informationen empfangen wird.

Bevorzugt weist die Steuereinheit einen Speicher auf, der zur Aufnahme wenigstens einer empfangenen charakteristischen Kennung oder anderen Informationen eingerichtet ist.

Weiterhin ist die Steuereinheit dazu eingerichtet, den Inhalt des Speichers ggf. mit der Geber-Kennzeichnung über den Emitter für gebündeltes Licht an ein Terminal eines Computersystems zur dortigen Weiterverarbeitung auszustrahlen.

Eine mögliche Anwendung der Erfindung betrifft die Ausstattung von Kaufhäusern bzw. den Einkaufsvorgang als solches:

Herkömmlicherweise werden in einem Warenhaus eine vielzahl gleicher Produkte in Regalen zum Kauf angeboten. Ein Kunde nimmt sich von den ihn interessierenden Produkten die entsprechende Anzahl aus dem Regal und legt diese in einen Einkaufswagen um alle eingesammelten Produkte an der Kasse zu bezahlen. Diese Vorgehensweise hat eine Reihe von Nachteilen. Zum einen haben die Verkaufslokale eher den Charakter von Warenlagern als von den Kunden ansprechenden, verkaufsfördernden Ladenlokalen. Außerdem ist der Raumbedarf an für den Kunden zugänglichen Räumlichkeiten durch die Bevorratung und die für Einkaufswagen zu bemessenden Gänge zwischen den Regalen relativ hoch. Außerdem besteht die Gefahr, daß ein Kunde die Ware zwar aus dem Regal nimmt, sie jedoch an der Kasse nicht bezahlt. Weiterhin ist der Beschickungsaufwand der Regale mit Waren nicht zu unterschätzen. Schließlich muß der Kunde an der Kasse die einzelnen Waren aus seinem Einkaufswagen auf ein Förderband legen um dem Kassenpersonal die Gelegenheit zur Erfassung dieser Ware zu geben. Dies führt zu erheblichen Wartezeiten an der Kasse.

Durch die Erfindung ist es möglich, die oben geschilderten Nachteile zu vermeiden und auf geringerem Verkaufsraum das gleiche oder ein umfangreicheres Warensortiment in für den Kunden ansprechender Weise zum Kauf anzubieten, wobei der Einkaufsvorgang für den Kunden auch insgesamt weniger beschwerlich und mit unangenehmen Wartezeiten verbunden ist.

Mit der Erfindung ist es nämlich möglich, daß ein Kunde eines Kaufhauses mittels des manuell betätigbaren, handgehaltenen Gebers, der eine für den Kunden (zumindest temporär) spezifische Kennung enthält in dem Kaufhaus diesen Geber bzw. dessen Lichtstrahl auf die vorstehend beschriebenen Schaltungsanordnungen richtet, welche sich jeweils bei einzelnen Waren befinden. In den Datenspeichern der jeweiligen Rechnereinheiten sind für die Waren, bei denen sich die Schaltungsanordnungen befinden, jeweilige charakteristische Kennungen gespeichert. Über den Rück-Kanal gibt die Rechnereinheit einer mittels Lichtstrahl aktivierten Schaltungsanordnung sowohl die charakteristische Kennung (für die Ware), als auch die Geber-Kennzeichnung des jeweiligen Gebers aus. Damit ist sichergestellt, daß nur dieser die charakteristische Kennung für die "angestrahlte" Ware in seinen Speicher aufnimmt.

Sobald der Kunde die charakteristischen Kennungen aller von ihm gewünschten Waren in dem Speicher seines Gebers aufgenommen hat, geht er zu einem Terminal in dem Kaufhaus, betätigt eine entsprechende Taste seines Gebers wodurch die Steuereinheit die charakteristischen Kennungen aller von ihm gewünschten Waren aus dem Speicher über den Emitter an das Terminal des Warenwirtschaftssystems des Kaufhauses überträgt. Das Warenwirtschaftssystem erzeugt entweder Listen der von dem Kunden ausgewählten Waren damit diese von Hand durch Hilfskräfte in dem Warenlager zusammengestellt werden. Alternativ dazu kann das Warenlager als Hochregallager oder dergl organisiert sein, aus dem die Waren durch das Warenwirtschaftssystem gesteuert automatisiert entnehmbar und zusammenstellbar sind.

Ein Kunde kann dann ohne Waren - und damit auch ohne nennenswerte Verzögerung - an der Kasse seinen Einkauf bezahlen und erhält hinter der Kasse seine fertig für ihn zusammengestellten und zusammengepackten Waren übergeben.

Es versteht sich, daß die vorstehend beschriebenen Merkmale und Eigenschaften der Erfindung auch in anderen als den konkret beschriebenen Kombinationen zusammengestellt sein können und daß auch derartige Kombinationen Gegenstand der vorliegenden Erfindung sind.

Weitere Eigenschaften, Merkmale, Alternativen und Vorteile werden anhand der nachstehenden Beschreibung der Zeichnung erläutert.

### Kurzbeschreibung der Zeichnung

Fig. 1 zeigt einen schematischen Blockschaltplan einer erfindungsgemäßen Schaltungsanordung zur Signalrückmeldung.

Fig. 2 zeigt einen schematischen Blockschaltplan eines erfindungsgemäßen Gebers zur Zusammenwirkung mit der Schaltungsanordnung nach Fig. 1.

### Ausführungsbeispiel der Erfindung

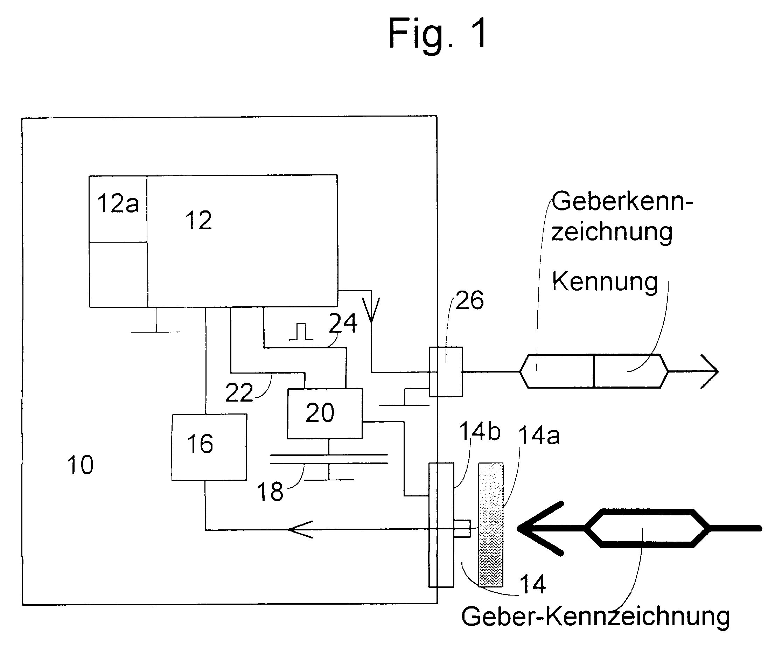

Der in Fig. 1 gezeigte Blockschaltplan der erfindungsgemäßen Schaltungsanordung 10 zur Signalrückmeldung stellt die "eine Hälfte" einer erfindungsgemäßen Signalübertragungsstrecke dar.

Die Schaltungsanordnung 10 hat eine Rechnereinheit 12, die zur Einspeisung, zur Verarbeitung und zur Ausgabe von Datensignalen eingerichtet ist. Weiterhin ist die Rechnereinheit 12 mit einer Empfängereinheit verbunden, die in der vorliegenden Ausführungsform durch eine Photodiode 14a und eine Solarzellenanordnung 14b gebildet ist.

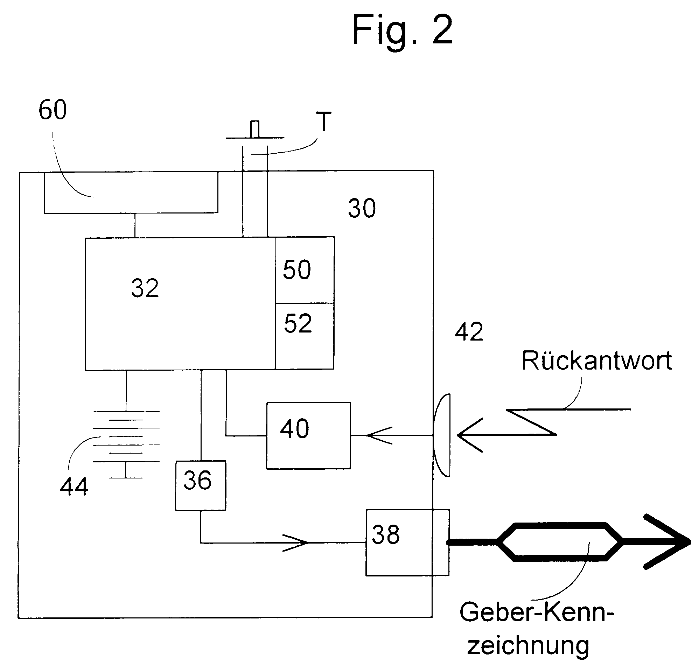

Die Photodiode 14a dient dazu, von einem externen Geber (siehe Fig. 2) einem Lichtstrahl aufmodulierte Geber-Kennzeichnungen zu empfangen und nach einer Signalaufbereitung mittels des Impulsformers 16 an die Rechnereinheit 12 weiter zu leiten.

Die Solarzellenanordnung 14b dient dazu, empfangenes Licht in elektrische Energie zu wandeln und in einem Energiespeicher in Form eines Kondensators 18 zu speichern. Der Kondensator 18 ist über eine Ladungssteuerung 20 mit der Stromversorgungsleitung 22 der Rechnereinheit 10 verbunden.

Auf diese Weise stellt die Empfängereinheit 14 dem Energiespeicher 18 und damit der Rechnereinheit 12 die zum Betrieb der Rechnereinheit 12 erforderliche elektrische Energie zur Verfügung, wobei einen erster Bereich in Form der Photodiode 14a für den Befehls-, Daten- oder Geber-Kennzeichnungsempfang dient, und ein zweiter Bereich in Form der Solarzellenanordnung 14b zum Energieempfang für den Betrieb der Rechnereinheit dient. Auf diese Weise stellt die Empfängereinheit 14 dem Energiespeicher 18 und damit der Rechnereinheit 12 die zum Betrieb der Rechnereinheit 12 erforderliche elektrische Energie zur Verfügung, wobei einen erster Bereich in Form der Photodiode 14a für den Befehls-, Daten- oder Geber-Kennzeichnungsempfang dient, und ein zweiter Bereich in Form der Solarzellenanordnung 14b zum Energieempfang für den Betrieb der Rechnereinheit dient. Je nach Größe und Form der Solarzellenanordnung 14b kann vor dieser eine entsprechende Optik zum Beispiel in Form eines Diffusors angeordnet sein, damit ein eintreffender (scharf gebündelter) Lichtstrahl gleichmäßig auf die gesamte Oberfläche der Solarzellenanordnung 14b verteilt wird und die Photodiode 14a das Signal sicher aufnehmen kann.

Die Ladungssteuerung 20 dient dazu, eine Ladung des Kondensators 18 zu überwachen. Erst wenn dieser Pegel erreicht ist und dann von einem externen Geber (siehe Fig. 2) ein Lichtstrahl auf die Solarzellenanordnung 14b gerichtet wird, schaltet die Ladungssteuerung 20 um und speist die Rechnereinheit 12 über die Stromversorgungsleitung 22 mit Strom, wobei die für den Betrieb fehlende Ladung des Kondensators 18 durch den Lichtstrahl von dem externen Geber aus der Solarzellenanordnung 14b kommt.

Sobald die Ladung des Kondensators 18 durch auf die Empfängereinheit 14 bzw. die Solarzellenanordnung 14b einstrahlendes Licht von dem externen Geber ausreicht und die Ladungssteuerung 20 an der Leitung 22 die Versorgungsspannung bereitstellt, wird außerdem über eine Steuer-Leitung 24 ein Startsignal an die Rechnereinheit 12 abgegeben.

Die Rechnereinheit 12 hat einen Datenspeicher 12a in Form eines EEPROMs, in dem eine für die jeweilige Schaltungsanordnung 10 charakteristische Kennung als Digitalwort abgespeichert ist. Die Rechnereinheit 12 ist so programmiert, daß sie im Dialog mit dem externen Geber die in dem EEPROM gespeicherte Kennung dem externen Geber zugänglich macht. Das hierzu von der Rechnereinheit 12 ausgeführte Software-Programm ist weiter unten beschrieben.

Außerdem ist die Rechnereinheit 12 mit einem Emitter in Form einer Leuchtdiode 26 für sichtbares oder infrarotes Licht verbunden die dazu dient, ein von der Rechnereinheit 12 erzeugtes, die charakteristische Kennung oder andere Information wiedergebendes Signal auszustrahlen.

Der in Fig. 2 gezeigte Blockschaltplan des Gebers 30 stellt die "andere Hälfte" der erfindungsgemäßen Signalübertragungsstrecke dar.

Der Geber 30 hat eine Steuereinheit zum Beispiel in Form einer (RISC-) CPU 32, die über einen Signalausgang und eine Leistungsstufe 36 einen Emitter für gebündeltes Licht in Form einer Laser-Diode 38 speist, wenn ein Benutzer eine Taste T betätigt, die einen entsprechenden Befehl an die CPU 32 sendet.

Außerdem ist die CPU 32 über eine Signalformerstufe 40 mit einem Empfänger in Form einer Photodiode 42 für die von der Schaltungsanordnung 10 (siehe Fig. 1) ausgestrahlte charakteristische Kennung oder andere Informationen verbunden. Die CPU 32 wird aus einer Batterie 44 gespeist, die der Stromversorgung der Leistungsstufe 36 für die Laser-Diode 38 dient.

Die CPU 32 hat einen Speicher in Form eines EEPROMs 50, in dem eine Geber-Kennzeichnung in Form eines Digitalwortes abgespeichert ist. Außerdem hat die CPU 32 einen Speicher in Form eines RAMs 52 der zur Aufnahme mehrerer empfangener charakteristischen Kennungen aus Schaltungsanordnungen (gemäß Fig. 1) oder anderen Informationen dient und entsprechend dimensioniert ist.

Das Software-Programm für die Rechnereinheit 12 der Schaltungsanordnung 10 und das Software-Programm für die CPU 32 des Gebers 30 werden nachstehend erläutert.

Die CPU 32 des Gebers 30 hat im wesentlichen zwei Betriebsprogramme. Das eine Betriebsprogramm wird durch Betätigen des Tasters T1 ausgelöst und dient dazu, die Geber-Kennzeichnung sowie ggf. die bereits empfangenen charakteristischen Kennungen aus Schaltungsanordnungen (gemäß Fig. 1) oder anderen Informationen aus dem EEPROM 50 auszulesen und so in eine Signalfolge umzucodieren, daß der von der Laser-Diode 38 ausgesendete Laser-Lichtstrahl die Beschränkungen der Laser Klasse 1 erfüllt. Die umcodierte Signalfolge wird der Leistungsstufe 36 für die Laser-Diode 38 zugeführt und von der Laser-Diode 38 als Lichtstrahl ausgeschickt. Über die Photodiode 42 wird eine von der Schaltungsanordnung 10 ausgestrahlte Antwort empfangen.

Die erhaltene Antwort wird decodiert und in dem RAM 52 abgelegt. Außerdem wird in einer weiterentwickelten Ausführungsform der Erfindung der Inhalt der Antwort (zum Beispiel der Preis oder die Bezeichnung der Ware oder der Dienstleistung, das Verfallsdatum oder dergl.) auf einem alphanumerischen Display 60 des Gebers 30 angezeigt.

Außerdem kann ein Benutzer den Lichtstrahl an ein Terminal eines Computersystems zur dortigen Weiterverarbeitung aussenden. Das Terminal des Computersystems hat eine serielle Schnittstelle, die einen der Photodiode 42 entsprechenden Aufnehmer aufweist.

Das Software-Programm für die Steuerung der Schaltungsanordnung 10 wird durch einen Impuls auf der Leitung 24 gestartet und hat zur Folge, daß die Rechnereinheit 12 von einem "Schlaf-Modus" in einen "Betriebsmodus" wechselt um von der Photodiode 14a empfangene Eingangssignale zu decodieren. Sobald die Rechnereinheit 12 aus den empfangenen Eingangssignalen zum Beispiel eine Geber-Kennzeichnung decodiert hat, liest die Rechnereinheit 12 aus dem Datenspeicher 12a die für die jeweilige Schaltungsanordnung 10 charakteristische Kennung aus und sendet sie zusammen mit der empfangenen Geber-Kennzeichnung über die Leuchtdiode 26 wieder aus. Anschließend wechselt die Rechnereinheit 12 wieder in den "Schlaf-Modus". Falls durch eine externe Lichtquelle die Ladung des Kondensators 18 soweit erhöht werden sollte, daß durch die ladungssteuerung 20 ein Start-Impuls an die Rechnereinheit 12 abgegeben wird, ohne daß die externe Lichtquelle ein Geber 30 ist, wechselt zwar die Rechnereinheit 12 vom "Schlaf-Modus" in den "Betriebsmodus". Allerdings wird in diesem Fall die (fehlende) Geber-Kennzeichnung aus dem Lichtstrahl nicht decodiert, so daß die Rechnereinheit 12 wieder in ihren "Schlaf-Modus" wechselt.

Durch das Zusammenfügen und anschließende Aussenden der charakteristischen Kennung mit der empfangenen Geber-Kennzeichnung wird auf der Geberseite sichergestellt, daß nicht eine vom Benutzer des jeweiligen Gebers unerwünschte charakteristische Kennung (der Schaltungsanordnung) erfaßt wird. Bei weniger kritischen Anwendungen kann die Rückübermittlung der Geber-Kennzeichnung auch entfallen.

## Patentansprüche

1. Schaltungsanordnung zur Signalrückmeldung (10), gekennzeichnet durch
- eine Rechnereinheit (12), die zur Einspeisung, zur Verarbeitung und zur Ausgabe von Datensignalen eingerichtet ist,
- eine Empfängereinheit (14), die dazu eingerichtet ist, von einem externen Geber (30) auf einen Lichtstrahl aufgeprägte Befehle, Daten oder Geber-Kennzeichnungen zu empfangen und an die Rechnereinheit (12) weiter zu leiten, wobei
- die Empfängereinheit (14) dazu eingerichtet ist, empfangenes Licht in elektrische Energie zu wandeln, und
- die Empfängereinheit (14) mit einem Energiespeicher (18) verbunden ist, der zum Betrieb der Rechnereinheit (12) elektrische Energie zur Verfügung stellt.

2. Schaltungsanordnung zur Signalrückmeldung nach Anspruch 1, dadurch gekennzeichnet, daß die Empfängereinheit (14)
- einen ersten Bereich (14a) aufweist, der zum Befehls-, Daten- oder Geber-Kennzeichnungsempfang eingerichtet ist, und
- einen zweiten Bereich (14b) aufweist, der zum Energieempfang für den Betrieb der Rechnereinheit (12) eingerichtet ist.

3. Schaltungsanordnung zur Signalrückmeldung nach Anspruch 1 oder 2, dadurch gekennzeichnet, daß die Empfängereinheit (14)
- wenigstens eine Solarzellenanordnung (14b) aufweist, die den ersten Bereich bildet, und
- wenigstens einen Lichtsensor (14a) aufweist, der den zweiten Bereich bildet.

4. Schaltungsanordnung zur Signalrückmeldung nach einem der vorhergehenden Ansprüche, dadurch gekennzeichnet, daß der Energiespeicher wenigstens einen Kondensator (18) aufweist.

5. Schaltungsanordnung zur Signalrückmeldung nach einem der vorhergehenden Ansprüche, gekennzeichnet durch eine Ladungssteuerung (20), die eine Grundladung des Energiespeichers (18) auf einen ersten vorbestimmten Pegel aus der Umgebungshelligkeit bewirkt und eine für den Betrieb der Rechnereinheit (12) darüber hinaus erforderliche Ladung des Energiespeichers (18) mit einem zweiten vorbestimmten Pegel durch Licht von dem externen Geber (30) bewirkt.

6. Schaltungsanordnung zur Signalrückmeldung nach dem vorhergehenden Anspruch, dadurch gekennzeichnet, daß die Ladungssteuerung (20) dazu eingerichtet ist, ein Startsignal an die Rechnereinheit (12) abzugeben, wenn die für den Betrieb der Rechnereinheit (12) erforderliche Ladung des Energiespeichers (18) durch auf die Empfängereinheit (14) einstrahlendes Licht von dem externen Geber (30) bereitgestellt ist.

7. Schaltungsanordnung zur Signalrückmeldung nach einem der vorhesrgehenden Ansprüche, dadurch gekennzeichnet, daß die Rechnereinheit (12) einen Datenspeicher (12a) aufweist, in dem eine für die jeweilige Schaltungsanordnung oder eine Gruppe von gleichartigen Schaltungsanordnungen charakteristische Kennung oder eine andere Information gespeichert ist.

8. Schaltungsanordnung zur Signalrückmeldung nach dem vorhergehenden Anspruch, dadurch gekennzeichnet, daß die Rechnereinheit (12) mit einem Emitter (26) verbunden ist, der dazu eingerichtet ist, ein von der Rechnereinheit (12) erzeugtes, die charakteristische Kennung oder andere Information wiedergebendes Signal auszustrahlen.

9. Schaltungsanordnung zur Signalrückmeldung nach einem der vorhergehenden Ansprüche, dadurch gekennzeichnet, daß die Rechnereinheit (12) dazu eingerichtet ist, mit einer auszustrahlenden charakteristischen Kennung oder anderen Information vorher empfangene Daten, Befehle oder Geber-Kennzeichnungen zu verknüpfen und mit diesen zusammen auszustrahlen.

10. Schaltungsanordnung zur Signalrückmeldung nach einem der vorhergehenden Ansprüche, dadurch gekennzeichnet, daß der Emitter eine Leuchtdiode (26) für sichtbares oder infrarotes Licht ist.

11. Schaltungsanordnung zur Signalrückmeldung nach einem der vorhergehenden Ansprüche, dadurch gekennzeichnet, daß eine strahlaufweitende oder als Diffusor wirkende Optik vor der Empfängereinheit (14) angeordnet ist, so daß zumindest der zweite Bereich (14b) einen eintreffenden Lichtstrahl großflächig empfängt.

12. Zur Zusammenwirkung mit der Schaltungsanordnung nach einem der vorhergehenden Ansprüche eingerichteter, manuell betätigbaren, handgehaltener Geber (30), mit
- einer Steuereinheit (32), die mit
-- einem Emitter (38) für gebündeltes Licht, und
-- einem Empfänger (42) für die von der Schaltungsanordnung (10) ausgestrahlte charakteristische Kennung oder andere Informationen verbunden ist, wobei die Steuereinheit (12) dazu eingerichtet ist, über den Emitter (42) gebündeltes Licht auszusenden.

13. Geber nach dem vorhergehenden Anspruch, dadurch gekennzeichnet, daß die Steuereinheit (32) einen Speicher (50) aufweist, der zur Aufnahme wenigstens einer empfangenen charakteristischen Kennung oder anderen Informationen eingerichtet ist.

14. Geber nach dem vorhergehenden Anspruch, dadurch gekennzeichnet, daß die Steuereinheit (32) dazu eingerichtet ist, den Inhalt des Speichers ggf. mit der Geber-Kennzeichnung über den Emitter (38) für gebündeltes Licht an ein Terminal eines Computersystems zur dortigen Weiterverarbeitung auszustrahlen.

15. Geber nach einem der vorhergehenden Ansprüche, dadurch gekennzeichnet, daß die Steuereinheit (32) mit einer Anzeigeeinheit, vorzugsweise einer alphanumerischen Anzeige verbunden ist, um aus einem Signalgeber (10) empfangene Informationen anzuzeigen.
